(19) **Europäisches Patentamt**

**European Patent Office**

**Office européen des brevets**

(11) **EP 0 885 793 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*B60T 8/26* (2006.01) *B60T 13/66* (2006.01)
*B60T 13/68* (2006.01)

(21) Anmeldenummer: **98106894.3**

(22) Anmeldetag: **16.04.1998**

(54) **Verfahren zur Abbremsung eines Fahrzeugs**

Method for braking of a vehicle

Procédé de freinage d'un véhicule

(84) Benannte Vertragsstaaten:
**DE FR IT SE**

(30) Priorität: **20.06.1997 DE 19726116**

(43) Veröffentlichungstag der Anmeldung:
**23.12.1998 Patentblatt 1998/52**

(73) Patentinhaber: **WABCO GmbH & CO. OHG**
**30453 Hannover (DE)**

(72) Erfinder: **Eckert, Horst**
**31547 Rehburg-Loccum (DE)**

(74) Vertreter: **Schrödter, Manfred**
**WABCO GmbH & Co. OHG**
**Postfach 91 12 62**
**30432 Hannover (DE)**

(56) Entgegenhaltungen:
DE-A- 3 829 951   DE-A- 4 020 693
DE-A- 4 235 364   DE-A- 4 428 929
DE-A- 19 514 382   DE-A- 19 519 768
DE-C- 4 442 487

**Beschreibung**

Die Erfindung betrifft ein Verfahren zur Abbremsung eines Fahrzeugs nach dem Oberbegriff des Patentanspruchs 1. Darin steht der Begriff "Bremse" als Sammelbegriff für alle an der Bremskrafterzeugung beteiligten Bauteile. Diese Aussage soll auch gelten, soweit im folgenden die Begriffe "Vorderachsbremse" und "Hinterachsbremse" verwendet werden.

Ein solches Verfahren stellt unter den Voraussetzungen entsprechend ausgelegter und gewarteter Bremse/n die Erzielung der durch das Verzögerungsanforderungssignal des Fahrers geforderten Bremsverzögerung sicher.

Eine Bremsanlage, die nach einem solchen Verfahren betrieben wird, wird häufig als "verzögerungsgeregelte Bremsanlage" bezeichnet.

Ein in der DE 41 42 670 A1 ab Spalte 5 Zeile 49 als "Vereinfachung" beschriebenes Verfahren der eingangs genannten Art läuft in der Bremsanlage gemäß der DE 41 42 670 A1 ab.

Dieses Verfahren setzt die Gewinnung eines Lastsignals mittels eines Lastsensors voraus. Ein Lastsensor bedeutet, insbesondere in Verbindung mit den zugehörigen Einbauteilen, einen erheblichen Aufwand.

Der Erfindung liegt deshalb die Aufgabe zugrunde, ein Verfahren der eingangs genannten Art mit einfachen Mitteln so fortzubilden, daß es keines Lastsensors bedarf.

Diese Aufgabe wird durch die in dem Patentanspruch 1 angegebene Erfindung gelöst. Vorteilhafte Ausgestaltungen und Weiterbildungen sind in den Unteransprüchen angegeben.

Ein Lastsensor hat auch, insbesondere in Verbindung mit seinen Einbauteilen, einen beträchtlichen Bedarf an Einbauraum. Er kann auch, insbesondere unter widrigen Einbau- und Einsatzbedingungen, störanfällig sein. Auch unter diesen Gesichtspunkten ist die Erfindung vorteilhaft.

Ist die bisher erwähnte Bremse nicht die einzige des Fahrzeugs, sondern, beispielweise, eine Vorderachsbremse, und weist das Fahrzeug außerdem wenigstens eine Hinterachsbremse auf, so kann die Erfindung derart fortgebildet werden, daß sie die benötigte Bremskraft durch Zuteilung von Zuspannenergien zu den Bremsen nach vorgegebenen Zuteilungsregeln so auf die Bremsen verteilt, daß das Fahrzeug und/oder die Bremsen ein gewünschtes Bremsverhalten zeigen.

Dabei ermöglicht die Erfindung ein beliebiges gewünschtes Bremsverhalten. Beispielsweise ist es denkbar, daß die Erfindung bei einer Bremsbetätigung die Zuspannenergien immer in einem festen Verhältnis zueinander hält oder die eine Bremse ständig einsetzt, während es die andere Bremse nur bei bestimmten Werten der variablen Größen der Zuteilungsregeln einsetzt. Überwiegend besteht das gewünschte Bremsverhalten aber in einem gleichmäßigen Bremsverschleiß gewährenden Bremseinsatz (verschleißoptimierter Bremseinsatz) oder in einem ein Bremsschleudern des Fahrzeugs vermeidenden Bremseinsatz (stabilitätsoptimierter Bremseinsatz) oder in einer. Kombination beider Einsatzarten. Eine solche Kombination liefert das bereits erwähnte Verfahren nach der DE 41 42 670 A1 (auf die die US-A-5 338 106 zurückgeht). Dieses Verfahren setzt die Bremsen bei kleineren Verzögerungsanforderungssignalen verschleißoptimiert und bei größeren Verzögerungsanforderungssignalen angenähert stabilitätsoptimiert ein. Die Einschränkung "angenähert" ist geboten, weil, wie in der DE 41 42 670 A1 ausführlich abgehandelt ist, eine Kombination von verschleißoptimierten und idealem stabilitätsoptimiertem Bremseinsatz nicht möglich ist.

Die Erfindung kann auch derart fortgebildet werden, daß sie die abgestimmte Mitbetätigung einer Anhängerbremsanlage ermöglicht.

Der Begriff "Zuspannenergie" ist vorliegend nicht streng physikalisch zu verstehen, sondern als Sammelbegriff für alle physikalischen Größen, bei deren Zuführung eine Bremse eine Bremskraft erzeugt. Als Zuspannenergie kommen beispielsweise elektrische Größen wie Strom und Spannung oder mechanische Größen wie Druck in Betracht. Im Falle von Druck als Zuspannenergie sind als Energieträger flüssige oder gasförmige Druckmittel, z. B. Druckluft, gebräuchlich.

Die Erfindung wird nunmehr unter Angabe weiterer Vorteile anhand einer schematisch zeichnerisch dargestellten beispielhaften, für die Ausführung der Erfindung geeigneten, Bremsanlage erläutert. Dabei bedeuten durchgezogene Verbindungslinien Zuspannenergieleitungen und strichpunktierte Verbindungslinien Signal- bzw. Steuerleitungen.

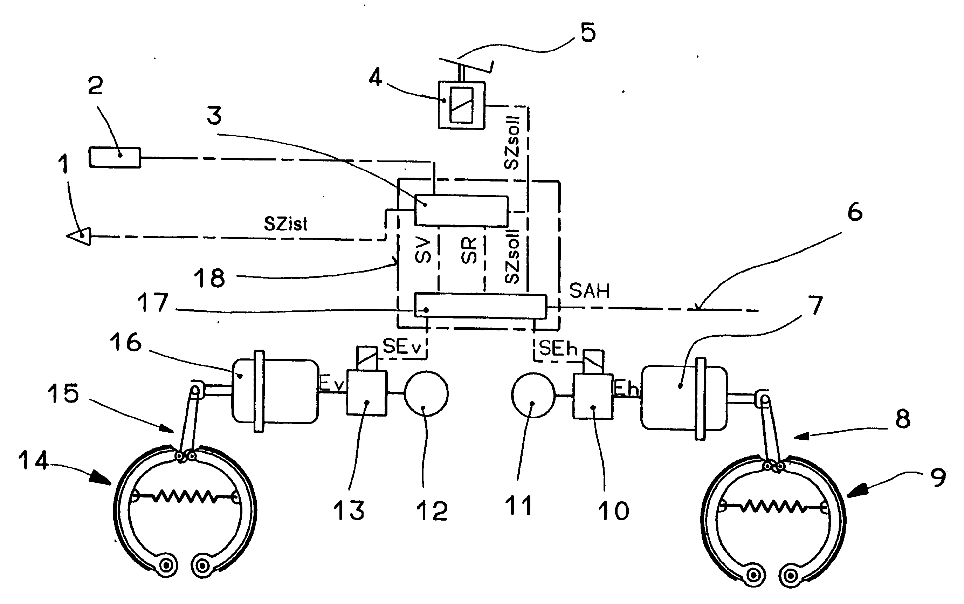

Die in der Zeichnung dargestellte Bremsanlage enthält eine Vorderachsbremse (15) und eine Hinterachsbremse (8), die durch die Zufuhr von Zuspannenergie (Ev, Eh) betätigt werden. Die Bremsen (15, 8) können die einzigen an der jeweiligen Achse sein, können aber, was der Regelfall ist, stellvertretend für mehrere, auf die Fahrzeugseiten verteilte Bremsen an der jeweiligen Achse stehen. Jede Bremse (15, 8) besteht aus einer die Bremskraft erzeugenden Radbremse (14 bzw. 9) und einer die Zuspannenergie (Ev bzw. Eh) empfangenden und in eine Zuspannkraft für die zugeordnete Radbremse (14 bzw. 9) umformenden Zuspanneinrichtung (16 bzw. 7) sowie Übertragungsteilen, die nicht näher bezeichnet sind.

Für jede Bremse (15 bzw. 8) enthält die Bremsanlage einen Zuspannenergiespeicher (12 bzw. 11). Diese werden in bekannter Weise von nicht dargestellten Versorgungseinrichtungen auf vollen Energieinhalt aufgeladen und gehalten.

Zu ihrer Betätigung enthält die Bremsanlage eine elektrische Steuereinrichtung. Diese besteht in der Grundausführung der Bremsanlage aus einem elektrischen Bremswertgeber (4), einer Steuerelektronik (3), einem Verzögerungsgeber (1), einer Zuteilelektronik (17) und einem elektrisch steuerbaren Energiezuteiler (13 bzw. 10) für jede Bremse (15 bzw. 8). Die Energiezuteiler (13 bzw. 10) sind in der Zuspannenergieleitung zwischen der zugeordneten Bremse (15 bzw. 8), d. h. deren Zuspanneinrichtung (16 bzw. 7), und dem zugeordneten Zuspannenergiespeicher (12 bzw. 11) angeordnet. Außerdem können zu der Steuereinrichtung, je nach Bauart der Energiezuteiler (13, 10) noch die jeweilige Zuspannenergie (Ev bzw. Eh) erfassende Energiesensoren gehören, die auch in den jeweiligen Energiezuteiler (13 bzw. 10) integriert sein können. Sind die dargestellten Bremsen (15, 8) nicht die einzigen, kann ein Energiezuteiler für jede Bremse oder ein gemeinsamer Energiezuteiler für die Bremsen einer Achse vorgesehen sein.

Alle bisher erwähnten Komponenten der Bremsanlage mit Ausnahme der Elektroniken (3, 17) sind von geläufigen Bauarten. Ist beispielsweise die Bremsanlage für Druck als Zuspannenergie ausgelegt, so bestehen die Versorgungseinrichtung aus einem Kompressor bzw. einer Pumpe sowie Nebeneinrichtungen wie Druckregler, Filter, Sicherungseinrichtungen usw., die Energiespeicher (12, 11) aus Vorratsbehältern, die Zuspanneinrichtungen (16, 7) aus Bremszylindern und die Energiezuteiler (13, 10) aus elektrisch gesteuerten Ventilen. Für den Verzögerungssignalgeber (1) kommt jede geeignete Bauart in Betracht. Gehört zu der Bremsanlage, wie heutzutage üblich, eine nicht dargestellte Blockierschutzanlage, so kann die zugehörige Blockierschutzelektronik als Verzögerungssignalgeber (1) herangezogen werden. Diese bildet aus dem Drehverhalten der Fahrzeugräder ein Verzögerungssignal, welches als das weiter unten näher behandelte Ist-Verzögerungssignal (SZist) dienen kann. Diese Lösung ist ohne zusätzlichen Geräteaufwand ausführbar und deshalb besonders vorteilhaft.

Die erwähnten Elektroniken (3, 17) können aus bekannten Bauarten abgeleitet werden. Diese brauchen nur in für den Fachmann geläufiger Weise auf die weiter unten beschriebenen Funktionen programmiert bzw. in ihren Programmen und, eventuell, bauteilmäßig adaptiert zu werden.

Der Ausgang des Bremswertgebers (4) ist mit einem Eingang der Steuerelektronik (3) und, parallel dazu, mit einem Eingang der Zuteilelektronik (17) verbunden. Ein weiterer Eingang der Steuerelektronik (3) ist mit dem Verzögerungssignalgeber (1) verbunden. Der Ausgang der Steuerelektronik (3) ist mit einem weiteren Eingang der Zuteilelektronik (17) verbunden. Ausgänge der Zuteilelektronik (17) sind jeweils mit dem Steuerteil eines Energiezuteilers (13 bzw. 10) verbunden.

Zur Verdeutlichung der genannten Verbindungen sind die Elektroniken (3 und 17) als getrennte Baueinheiten dargestellt. In ausgeführten Bremsanlagen sind die Elektroniken (3 und 17) aber häufig, wie durch eine gestrichelte Einfassung (18) angedeutet ist, baulich und funktionell teilweise oder vollständig ineinander integriert. Auch eine teilweise oder vollständige Integration der Elektroniken (3 und 17) in die Blockierschutzelektronik ist üblich.

Die Wirkprinzipien der Bremsanlage lassen sich am klarsten am Beispiel einer Bremsanlage mit einer Bremse oder Bremsen an einer Achse herausarbeiten. Für die nunmehr folgende Funktionsbeschreibung wird deshalb zunächst angenommen, nur eine der Bremsen, beispielsweise die Vorderachsbremse (15), sei vorhanden.

Unter "Bremskraft" ist im folgenden stets die Bremskraft zwischen Reifen und Fahrbahn zu verstehen.

In der Steuerelektronik (3) ist ein Verknüpfungssignal (SV) gespeichert. Dessen aktuellen Wert hat die Steuerelektronik (3) durch Aktualisierung eines während der Produktion der Steuerelektronik (3) und/oder des Fahrzeugs eingegebenen Anfangswertes bei vorangegangenen Bremsbetätigungen auf die weiter unten beschriebene Weise selbst ermittelt.

In der Zuteilelektronik (17) sind Bemessungsregeln für die Bemessung eines Vorderachs-Zuspannenergiesignals (SEv) gespeichert.

Zur Betätigung der Bremsanlage wirkt der Fahrer über ein Betätigungsorgan (5), welches in der Zeichnung als Pedal angedeutet ist, auf den Bremswertgeber (4) ein.

Dieser gibt daraufhin an seinem Ausgang an die Steuerelektronik (3) und die Zuteilelektronik (17) ein Verzögerungsanforderungssignal (SZsoll) ab, dessen Wert von der Kraft des Fahrers auf das Betätigungsorgan (5) und/oder von dessen Betätigungsweg abhängt.

Mit dem Verzögerungsanforderungssignal (SZsoll) fordert der Fahrer eine Bremsverzögerung (Zsoll).

Die Steuerelektronik (3) gibt bei Erhalt des Verzögerungsanforderungssignals (SZsoll) das Verknüpfungssignal (SV) an die Zuteilelektronik (17) aus.

Die Zuteilelektronik (17) stellt bei Erhalt des Verzögerungsanforderungssignals (SZsoll) und des Verknüpfungssignal (SV) deren Werte fest, errechnet damit nach den eingespeicherten Bemessungsregeln ein Vorderachs-Zuspannenergiesignal (SEv) und gibt dieses an den Steuerteil des zugeordneten Energiezuteilers (13) aus. Der Energiezuteiler (13) läßt daraufhin aus dem zugeordneten Zuspannenergiespeicher (12) entsprechend dem Wert des Vorderachs-Zuspannenergiesignals (SEv) Zuspannenergie (Ev) zu der Zuspanneinrichtung (16) der Vorderachsbremse (15) durch. Deren Radbremse (14) erzeugt daraufhin eine der Vorderachs-Zuspannenergie (Ev) entsprechende Bremskraft (Bv). Diese ruft eine Bremsverzögerung (Zist) des Fahrzeugs hervor.

Der Verzögerungsgeber (1) ermittelt die Bremsverzögerung (Zist) und gibt ein entsprechendes Ist-Verzögerungssignal (SZist) an die Steuerelektronik (3) ab.

Die Steuerelektronik (3) vergleicht in einem vorgegebenen Takt das Ist-Verzögerungssignal (SZist) mit dem Verzögerungsanforderungssignal (SZsoll). Weicht das Ist-Verzögerungssignal (SZist) nicht von dem Verzögerungsanforderungssignal (SZsoll) ab, so ist die Bremsverzögerung (Zist) gleich der geforderten (Zsoll).

Die zur Erzeugung der geforderten Bremsverzögerung erforderliche Vorderachs-Bremskraft (Bv) beträgt nach dem dynamischen Grundgesetz (Newton)

$$Bv = m \cdot Zsoll \qquad\qquad (I)$$

mit der Fahrzeugmasse m.

Die Beziehung unterstreicht die allgemein geläufige Tatsache, daß bei gegebener Verzögerungsanforderung (Zsoll) die dazu erforderliche Bremskraft (B) von der Fahrzeugmasse (m) abhängt.

Zwischen Zsoll und dem entsprechenden Verzögerungsanforderungssignal (SZsoll) besteht die Beziehung

$$Zsoll = U \cdot SZsoll \qquad\qquad (II)$$

mit U als Umrechnungsfaktor. Deshalb läßt sich Beziehung (I) in der Form

$$Bv = m \cdot U \cdot SZsoll \qquad\qquad (III)$$

schreiben.

Andererseits gilt für die Vorderachs-Bremskraft

$$Bv = Rv \cdot (Ev - Ev0) \qquad\qquad (IV),$$

worin

Rv der Radbremsfaktor, der angibt, wieviel Bremskraft pro Einheit Zuspannenergie die betrachtete Vorderachsbremse (15) abgibt, und

Ev0 die Ansprech-Energie, bei der die Bremskraftabgabe der Vorderachsbremse (15) beginnt,

sind.

Zwischen (Ev - Ev0) und dem entsprechenden Vorderachs-Zuspannenergiesignal (SEv-SEv0) besteht die Beziehung

$$Ev - Ev0 = K \cdot (SEv - SEv0) \qquad\qquad (V)$$

mit K als Umrechnungsfaktor.

Aus (III), (IV) und (V) läßt sich herleiten

$$SEv - SEv0 = m \cdot \frac{U}{K \cdot Rv} \cdot SZsoll \qquad\qquad (VI)$$

Bisher mögen das Fahrzeug die Fahrzeugmasse ml und das in der Steuerelektronik (3) gespeicherte Verknüpfungssignal SV den Wert SV1 besessen haben.

Nun sei angenommen, die Fahrzeugmasse werde durch Zuladung von ml auf m2 vergrößert.

Bei der ersten Bremsung nach der Zuladung beginnt die Bremsanlage wie bisher zu arbeiten, d. h. die Steuerelektronik (3) gibt an die Zuteilelektronik (17) das bisher zutreffende Verknüpfungssignal (SV1) aus, so daß auch die Vorderachsbremse (15) im Ergebnis die bisherige Bremskraft erzeugt. Diese reicht aber nicht aus, angesichts der vergrößerten Fahrzeugmasse (m2) die geforderte Bremsverzögerung (Zsoll) zu erbringen. Die Steuerelektronik (3) wird deshalb eine Abweichung des von dem Verzögerungsgeber (1) empfangenen Ist-Verzögerungssginals (SZist) von dem Verzögerungsanforderungssignal (SZsoll) feststellen. Die Steuerelektronik (3) erhöht nun den Wert SV1 des Verknüpfungssignals (SV) von Takt zu Takt stufenweise bis auf einen Wert SV2, bei dem die Vorderachs-Bremskraft (Bv) eine Bremsverzögerung (Zist) erbringt, deren zugehöriges Ist-Verzögerungssignal (Szist) nicht mehr von dem Verzögerungsanforderungssignal (SZsoll) abweicht. Bricht der Fahrer die Bremsbetätigung vorher ab, so setzt die Steuerelektronik (3) die stufenweise Erhöhung des Verknüpfungssignals (SV) bei der nächsten Bremsbetätigung mit dem zuletzt erreichten Wert als Anfangswert fort.

Analog zu dem Vorstehenden verringert die Steuerelektronik (3) nach einer Fahrzeug-Entladung mit einer Verringerung der Fahrzeugmasse (m) den Wert des Verknüpfungssignals (SV) von Takt zu Takt stufenweise.

Das Verknüpfungssignal ändert sich also im gleichen Sinne wie die Fahrzeugmasse. Formel (VI) kann deshalb durch eine Beziehung

$$SEv - SEv0 = SV \bullet \frac{M \bullet U}{K \bullet Rv} \bullet SZsoll \qquad (VIIa)$$

ersetzt werden, die auch in der Form

$$SEv = SV \bullet \frac{M \bullet U}{K \bullet Rv} \bullet SZsoll + SEv0 \qquad (VIIb)$$

geschrieben Werden kann, worin (M) ein die jeweilige Relation zwischen Fahrzeugmasse (m) und Verknüpfungssignal (SV) zum Ausdruck bringender Koeffizient ist.

In dieser Beziehung verknüpft also das Verknüpfungssignal (SV) das Verzögerungsanforderungssignal (SZsoll) und das zugeordnete Vorderachs-Zuspannenergiesignal (SEv) und damit auch die zugeordnete Bremskraft (Bv). Das Verknüpfungssignal (SV) übernimmt deshalb die Rolle des Lastsignals des Stands der Technik und macht damit den im Stand der Technik erforderlichen Lastsensor entbehrlich.

Die Beziehung (VIIa bzw. VIIb) gibt, wenigstens im Ergebnis, die in der Zuteilelektronik (17) gespeicherten Bemessungsregeln wieder.

In einer anderen Ausgestaltung verändert die Steuerelektronik (3) während des Erhalts eines Verzögerungsanforderungssignals (SZsoll), also während einer Bremsbetätigung, das Verknüpfungssignal (SV) nicht, sondern nur beim Erlöschen des Verzögerungsanforderungssignals (SZsoll), also nach Abschluß einer Bremsbetätigung. In dieser Ausgestaltung verändert die Steuerelektronik (3) während einer Bremsbetätigung bei einer Abweichung des Ist-Verzögerungssignals (SZist) in dem vorgegebenen Takt stufenweise ein Hilfssignal (SR), bis die Abweichung verschwindet. Das Hilfssignal (SR) gibt die Steuerelektronik (3) an einem anderen Ausgang an die Zuteilelektronik (17) ab. Diese ist in diesem Fall so ausgebildet, daß sie während des Erhalts eines Verzögerungsanforderungssignals (SZsoll), also während einer Bremsbetätigung, in die Bemessungsregel gemäß Beziehung (VIIa bzw. VIIb) das Produkt (SZsoll • SR) aus dem Verzögerungsanforderungssignal (SZsoll) und dem Hilfssignal (SR) einsetzt. Nach Abschluß der Bemsbetätigung aktualisiert dann die Steuerelektronik (3) das Verknüpfungssignal (SV) nach dem letzten Wert oder einem anderen Wert, z. B. einem Mittelwert, des Hilfssignals (SR).

In der Regel wird die Steuerelektronik (3) so ausgebildet, daß sie auf eine Abweichung des Ist-Verzögerungssignals (SZist) erst erkennt, wenn diese eine vorbestimmte Toleranzbreite erreicht oder überschreitet. Die Toleranzbreite kann einerseits wegen unvermeidbarer Gerätestreuungen, andererseits zur Neutralisation geringfügiger dynamischer Vorgänge während der Bremsbetätigung erforderlich sein.

Häufig unterliegt das Fahrzeug beim Beginn einer Bremsbetätigung einer Anfangsverzögerung bzw. einer Beschleunigung, die als negative Anfangsverzögerung anzusehen ist. Eine solche Anfangsverzögerung kann auf einer anderen Bremseinrichtung (z. B. verschleißlose Dauerbremse wie Motorbremse oder Retarder) und/oder Fahrwiderständen und/oder ansteigender oder abfallender Fahrbahn beruhen. Eine solche Anfangsverzögerung kann Folgen für die Bremsanlage oder für den Fahrer haben, wie sie in der DE 41 31 169 A1 (auf die die US-A-5 599 072 zurückgeht) ausführlich beschrieben sind. Sollen solche Folgen umgangen werden, kann die bisher beschriebene Grundausführung der Bremsanlage fortgebildet werden. In dieser Fortbildung speichert die Steuerelektronik (3) bei Erhalt des Verzögerungsanforderungssignals (SZsoll) das vorhandene Ist-Verzögerungssignal als Anfangs-Verzögerungssignal (SZist0). Sodann bildet sie bei jedem Takt die Differenz zwischen dem gerade empfangenen momentanen Ist-Verzögerungssignal (SZistM) und dem Anfangs-Verzögerungssignal (SZist0) und verwendet diese Differenz (SZistM - SZist0) als Ist-Verzögerungssignal (SZist) zum Vergleich mit dem Verzögerungsanforderungssignal (SZsoll).

Es kann vorkommen, daß die Vorderachsbremse (15) sich ihrer Belastungsgrenze nähert und, je nach Bremsenbauart, deshalb die Vorderachs-Bremskraft (Bv) abfällt. Wegen dieses Bremskraftabfalls fallen die Bremsverzögerung (Zist) sowie auch das Ist-Verzögerungssignal (SZist) ab, so daß sich eine Abweichung des letzteren von dem Verzögerungsanforderungssignal (Szsoll) einstellt. Die Steuerelektronik (3) reagiert darauf wie auf eine Vergrößerung der Fahrzeugmasse (m), d. h., je nach Ausgestaltung, mit einer Vergrößerung des Verknüpfungssignals (SV) bzw. des Hilfssignals (SR). Die Zuteilelektronik (17) erhöht daraufhin das Vorderachs-Energiesignal (SEv) mit dem Ergebnis, daß die ursprüngliche Bremskraft (Bv) wiederhergestellt wird. Dabei kann die sich ihrer Belastungsgrenze nähernde Vorderachsbremse (15) zusätzlich belastet und gefährdet werden.

Dieses Verhalten kann durch eine Fortbildung der Steuerelektronik (3) oder der Zuteilelektronik (17) vermieden werden. Bei dieser Fortbildung erhöhen bei Annäherung der Vorderachsbremse (15) an ihre Belastungsgrenze entweder die Steuerelektronik (3) nicht das Verknüpfungssignal (SV) bzw. das Hilfssignal (SR) oder die Zuteilelektronik (17) bei gleichbleibenden Verzögerungsanforderungssignal (SZsoll) nicht das Vorderachs-Zuspannenergiesignal (SEv). Als Folge dieser Fortbildung spürt der Fahrer bei Annäherung der Vorderachsbremse (15) an ihre Belastungsgrenze ein Nachlassen der Bremswirkung (Fading), so daß er seine Fahrweise darauf einstellen kann.

In einer anderen Ausgestaltung löst der Erkennungsfall einer Annäherung an die Belastungsgrenze eine Belastungs-konform verminderte Anpassung des Verknüpfungssignals (SV) bzw. des Hilfssignals (SR) aus.

Die Annäherung der Vorderachsbremse (15) an ihre Belastungsgrenze kann der Steuerelektronik (3) bzw. der Zuteilelektronik (17) auf verschiedene Weise mitgeteilt werden. Eine Möglichkeit ist die Anordnung eines oder mehrerer Temperatursensoren an der Vorderachsbremse (15), insbesondere an deren Radbremse (14), die mit Eingängen der Steuerelektronik (3) bzw. der Zuteilelektronik (17) verbunden sind und entweder kontinuierliche Temperatursignale oder Grenztemperatursignale abgeben. Die Steuerelektronik (3) bzw. die Zuteilelektronik (17) sind in diesem Fall so ausgebildet, daß sie bei Erhalt eines der Grenztemperatur entsprechenden Temperatursignals bei unverändertem Verzögerungsanforderungssignal (SZsoll) das Verknüpfungssignal (SV) bzw. das Hilfssignal (SR) bzw. das Vorderachs-Zuspannenergiesignal (SEv) solange konstant halten, wie das betreffende Temperatursignal ansteht bzw. wie die Bremsbetätigung dauert.

In der Fig. ist beispielhaft ein der Vorderachsbremse (15) zugeordneter und mit einem Eingang der Steuerelektronik (3) verbundener Temperatursensor (2) andeutet.

Andere Möglichkeiten, die Annäherung der Vorderachsbremse (15) an ihre Belastungsgrenze festzustellen, sind, in der Steuerelektronik (3) und/oder in der Zuteilelektronik (17) Algorithmen für ein mathematisches Aufheizmodell oder ein mathematisches Belastungs-Kommulierungsmodell zu speichern, welche den Belastungszustand der Vorderachsbremse aus Werkstoffkennwerten wie beispielsweise der Wärmekapazität sowie aus den Zuspannenergien, den Radgeschwindigkeiten, den Betätigungszeiten, den Abkühlzeiten usw. ermitteln.

Nun sei angenommen, das Fahrzeug sei als Zugfahrzeug zur Koppelung mit einem Anhänger eingerichtet, und dieser habe eine Anhängerbremsanlage, die in üblicher Weise durch ein in dem Zugfahrzeug erzeugtes Anhänger-Steuersignal (SAH) gesteuert wird.

Wie das Anhänger-Steuersignal (SAH) erzeugt wird, hängt von der Ausbildung der Anhängerbremsanlage ab.

So gibt es Anhängerbremsanlagen mit selbsttätiger lastabhängiger Bremskraftregelung. Diese bewirken, daß bei jedem Beladungszustand des Anhängers jedem Wert des Anhänger-Steuersignals (SAH) eine bestimmte Anhänger-Bremsverzögerung oder eine Anhänger-Bremsverzögerung innerhalb einer vorgegebenen Bandbreite zugeordnet ist. Eine derartige Anhängerbremsanlage und die Bremsanlage des Zugfahrzeugs sind hinsichtlich der Richtungsstabilität des von dem Zugfahrzeug und dem Anhänger gebildeten Fahrzeugzuges bei einer Bremsbetätigung gut aufeinander abgestimmt, wenn für das Anhänger-Steuersignal (SAH) und die Zugfahrzeug-Bremsverzögerung die gleiche oder wenigstens eine ähnliche Zuordnung gilt.

Eine solche Abstimmung der Bremsanlagen schreibt beispielsweise eine für viele europäische Länder maßgebliche "Richtlinie der Europäischen Gemeinschaften", kurz EG-Richtlinie genannt, für bestimmte Fahrzeugklassen in Gestalt von "Anpassungsbändern" (compatibility bands) vor.

Im Falle einer solchen Anhängerbremsanlage kann grundsätzlich das Verzögerungsanforderungssignal (SZsoll) auch als Anhänger-Steuersignal (SAH) dienen, sofern die Zuordnung zwischen dem Verzögerungsanforderungssignal (SZsoll) und der Zugfahrzeug-Bremsverzögerung genau oder innerhalb der genannten Bandbreite gleich der Zuordnung zwischen dem Anhänger-Steuersignal (SAH) und der Anhänger-Bremsverzögerung ist. In der Regel muß aber das Anhänger-Steuersignal (SAH) durch Umformung und Aufbereitung aus dem Verzögerungsanforderungssignal (SZsoll) gebildet werden, und dies geschieht in der Zuteilelektronik (17).

Die Zuteilelektronik (17) nimmt die Umformung und Aufbereitung des Verzögerungsanforderungssignals (SZsoll) zu dem Anhänger-Steuersignal (SAH) anhand eingespeicherter Algorithmen und, soweit erforderlich, eingespeicherter Einflußgrößen vor und gibt das Anhänger-Steuersignal (SAH) an einem Ausgang an eine mit diesem Ausgang verbundene Anhängersteuerleitung (6) ab. In der Regel wird dabei das Anhänger-Steuersignal (SAH) in einer bestimmten Relation zu dem Verzögerungsanforderungssignal (SZsoll) stehen. Zusätzlich kann die Zuteilelektronik (17) so ausgebildet sein, daß sie bei der Bildung des Anhänger-Steuersignals (SAH) auch die Fahrzeugmasse (m) in Gestalt des Verknüpfungssignals (SV) berücksichtigt. Dadurch ermöglicht sie eine auf die Fahrzeugmasse (m) abgestimmte Lage der Zuordnung zwischen der Fahrzeug-Bremsverzögerung und dem Anhänger-Steuersignal (SAH) innerhalb der erwähnten, etwa vorgegebenen Bandbreite.

Andere Anhängerbremsanlagen haben keine selbsttätige lastabhängige Bremskraftregelung. Derartige Anlagen ordnen jedem Anhänger-Steuersignal (SAH) eine bestimmte Bremskraft zu, woraus bei gegebenem Anhänger-Steuersignal (SAH) für verschiedene Anhängermassen auch unterschiedliche Anhänger-Bremsverzögerungen folgen. Durch ein auf die bisher beschriebene Art gebildetes Anhänger-Steuersignal (SAH) ist eine gute Abstimmung zwischen einer solchen Anhhängerbremsanlage und der Bremsanlage des Zugfahrzeugs nicht möglich.

Eine Möglichkeit, eine derartige Anhängerbremsanlage auf die Bremsanlage des Zugfahrzeugs.abzustimmen, bietet eine Koppelkraftregelung, wie sie beispielsweise in der DE 42 43 245 A1 (auf die die US-A-5 403 073 zurückgeht) beschrieben ist, welche die Koppelkraft zwischen dem Zugfahrzeug und dem Anhänger mittels des Anhänger-Steuersignals auf null oder einen Sollwert einregelt. Eine Koppelkraftregelung setzt eine Kraftsensierung und zusätzliche Regeleinrichtungen voraus und ist deshalb aufwendig. Die dargestellte Bremsanlage vermeidet diesen Aufwand und ermöglicht dennoch eine gut abgestimmte Mitbetätigung der Anhängerbremsanlage.

Zu diesem Zweck bemißt im Falle einer Anhängerbremsanlage ohne lastabhängige Bremskraftregelung die Zuteilelektronik (17) bei Erhalt eines Verzögerungsanforderungssignals (SZsoll) das Anhänger-Steuersignal (SAH) nach dem Produkt (SV·SZsoll) aus dem Verknüpfungssignal (SV) und dem Verzögerungsanforderungssignal (SZsoll). In der Ausgestaltung, in der im Zugfahrzeug während einer Bremsbetätigung das Verknüpfungssignal (SV) nicht verändert wird, sondern das Hilfssignal (SR), bemißt die Zuteilelektronik (17) bei Erhalt eines Verzögerungsanforderungssignals (SZsoll) das Anhänger-Steuersignal (SAH) nach dem Produkt (SV·SR·SZsoll) aus dem Verknüpfungssignal (SV), dem Hilfssignal (SR) und dem Verzögerungsanforderungssignal (SZsoll). Wie oben näher abgeleitet ist, ist das Verknüpfungssignal (SV) als ein Lastsignal anzusehen. Das wieder von der Zuteilelektronik (17) an die Anhängersteuerleitung (6) abgegebene Anhänger-Steuersignal (SAH) kann also als lastabhängig modifiziertes Verzögerungsanforderungssignal (SZsoll) angesehen werden. Es kann deshalb gesagt werden, daß die dargestellte Bremsanlage im Falle einer solchen Anhängerbremsanlage ein lastabhängig eingestelltes Anhänger-Steuersignal (SAH) abgibt und damit die lastabhängige Bremskraftregelung der Anhängerbremsanlage in die Bemessung des Anhänger-Steuersignals (SAH) und damit in die Bremsanlage des Zugfahrzeugs verlagert.

Zwecks weiterer Anpassung der so erzielbaren Abstimmung kann in die Zuteilelektronik (17) eine Einflußgröße eingegeben und von dieser bei der Bildung des Anhänger-Steuersignals (SAH) berücksichtigt werden, welche unterschiedliche Auslegungen der Zugfahrzeugbremse/n und der Bremsen der Anhängerbremsanlage zum Ausdruck bringt.

Sollten zu dem von dem Zugfahrzeug und dem Anhänger gebildeten Fahrzeugzug weitere Anhänger gehören, und sind diese mit einer Anhängerbremsanlage ausgerüstet, die von einem im Zugfahrzeug erzeugten Anhänger-Steuersignal gesteuert wird, so kann das auf die vorstehend beschriebenen Arten gebildete Anhänger-Steuersignal (SAH) auch zur Mitbetätigung der Anhängerbremsanlagen der weiteren Anhänger herangezogen werden.

Nunmehr wird auch die Hinterachsbremse (8) als vorhanden angenommen. In diesem Fall sind in der Zuteilelektronik (17) Zuteilungsregeln gespeichert, nach denen sie das Vorderachs-Zuspannenergiesignal (SEv) und ein Hinterachs-Zuspannenergiesignal (SEh) bildet und somit den Bremsen (15, 8) die Zuspannenergien (Ev, Eh) zuteilt. Dadurch wird die analog zu der Beziehung (I) für die Erzielung der geforderten Bremsverzögerung (Zsoll) benötigte Gesamtbremskraft (B=Bv+Bh) auf die Vorderachsbremse (15) und die Hinterachsbremse (8) aufgeteilt.

In die Zuteilungsregeln können, je nach gewünschtem Bremsverhalten, verschiedene Einflußgrößen, wie beispielsweise als Festwerte der schon erwähnte Radbremsfaktor (Rv) der Vorderachsbremse (15) und der Hinterachs-Radbremsfaktor (Rh) eingehen, die in der Zuteilelektronik (17) gespeichert bzw. derselben zuzuführen sind.

Als Zuteilungsregeln können in der Zuteilelektronik (17) beispielsweise Algorithmen gespeichert sein, die zu Zielkennlinien Ev, Eh = f(SZsoll, SV) der Zuspannenergien (Ev, Eh) als Funktionen des Verzögerungsanforderungssignals (SZsoll) führen, die den Zielkennlinien entsprechen, die mit der ab Spalte 5 Zeile 49 der DE 41 42 670 A1 beschriebenen Vereinfachung erzielt werden und die für jeden Beladungszustand des Fahrzeugs, vorliegend also für jeden Wert des Verknüpfungssignals (SV), jeweils aus einem verschleißoptimierten und einem angenähert-stabilitätsoptimierten Kennlinienzweig zusammengesetzt sind. Als Einflußgrößen sind in diesem Fall der in der Zuteilelektronik (17) neben den Radbremsfaktoren (Rv, Rh) die an der genannten Stelle der DE 41 42 670 A1 erwähnten allgemeinen reproduzierbaren Zusammenhänge mit dem Verknüpfungssignal (SV) anstelle des Lastsignals gespeichert.

In dem Fall, daß die Steuerelektronik (3) während einer Bremsbetätigung das Verknüpfungssignal (SV) bzw. das Hilfssignal (SR) ändert, errechnet die Zuteilelektronik (17) noch während der laufenden Bremsbetätigung die Zuspannenergiesignale (SEv bzw. SEh) anhand des geänderten Verknüpfungs- bzw. Hilfssignals (SV bzw. SR) nach den Zuteilungsregeln neu. Im Fall einer Veränderung des Verknüpfungssiganls (SV) paßt die Zuteilelektronik (17) die Bremskraftverteilung zwischen den Achsen sofort so an, daß das erreichte Bremsverhalten aufrechterhalten wird.

Die oben bezüglich der Bildung des Anhänger-Steuersignals (SAH) gemachten Aussagen bleiben durch das Hinzukommen der Hinterachsbremse (8) unberührt.

Die oben bezüglich der Annäherung der Vorderachsbremse (15) an ihre Belastungsgrenze gemachten Ausführungen gelten für die Hinterachsbremse (8), aber auch für die Bremsen der Anhängerbremsanlage entsprechend. Wenn auch nur eine Bremse sich ihrer Belastungsgrenze nähert, führt das, je nach Bremsenbauart, im Regelfall zu einem Abfall der Gesamtbremskraft, der dann, gegebenenfalls, das Konstanthalten des Verknüpfungssignals (SV) bzw. des Hilfssignals (SR) bzw. der Zuspannenergiesignale (SEv, SEh), auf jeden Fall aber das Konstanthalten des Anhänger-Steuersignals (SAH) auslöst.

Für den vorstehend abgehandelten Fall einer Mehrbremsenanlage ist noch darauf hinzuweisen, daß bei Bremsanlagen nach dem Stand der Technik durch die Wiederherstellung der Gesamtbremskraft nicht nur die sich ihrer Belastungsgrenze nähernde/n Bremse/n zusätzlich belastet und gefährden werden, sondern auch die vorher nur normal belasteten Bremse/n an ihre Belastungsgrenze getrieben werden können.

**Patentansprüche**

1. Verfahren zur Abbremsung eines Fahrzeugs mit wenigstens einer durch Zuspannenergie betätigten Bremse (15 bzw. 8),
   welches durch ein vom Fahrer erzeugtes Verzögerungsanforderungssignal (SZsoll) gestartet wird,
   und in dem der Bremse (15 bzw. 8) Zuspannenergie derart zugeführt wird, daß ein dadurch bewirktes Ist-Verzögerungssignal (SZist) sich dem Verzögerungsanforderungssignal (SZsoll) angleicht,
   und in dem ferner die Zuspannenergie als Funktion des Verzögerungsanforderungssignals (SZsoll) sowie eines Lastsignals bemessen wird,
   **dadurch gekennzeichnet,**
   **daß** als Lastsignal ein das Verzögerungsanforderungssignal (SZsoll) und die zugeordnete Bremskraft verknüpfendes Verknüpfungssignal (SV) herangezogen wird.

2. Verfahren nach Anspruch 1,
   **dadurch gekennzeichnet,**
   **daß** während einer Bremsbetätigung bei von dem Verzögerungsanforderungssignal (SZsoll) abweichendem Ist-Verzögerungssignal (SZist) das Verknüpfungssignal (SV) geändert wird.

3. Verfahren nach Anspruch 1,
   **dadurch gekennzeichnet,**
   **daß** während einer Bremsbetätigung bei von dem Verzögerungsanforderungssignal (SZsoll) abweichenden Ist-Verzögerungssignal (SZist) ein Hilfssignal (SR) geändert wird und das Verknüpfungssignal (SV) nach Abschluß der Bremsbetätigung aktualisiert wird.

4. Verfahren nach einem der vorhergehenden Ansprüche, wobei die wenigstens eine Bremse (15 bzw. 8) eine Vorderachsbremse (15) und die Zuspannenergie eine Vorderachs-Zuspannenergie (Ev) ist und das Fahrzeug außerdem wenigstens eine durch eine Hinterachs-Zuspannenergie (Eh) betätigte Hinterachsbremse (8) aufweist,
   **dadurch gekennzeichnet,**
   **daß** den Bremsen (15, 8) die Zuspannenergien (Ev, Eh) nach vorgegebenen Zuteilungsregeln zugeteilt werden.

5. Verfahren nach Anspruch 4,
   **dadurch gekennzeichnet,**
   **daß** das Verknüpfungssignal (SV) und das Verzögerungsanforderungssignal (SZsoll) als Variable der Zuteilungsregeln herangezogen werden.

6. Verfahren nach einem der vorhergehenden Ansprüche,
   **dadurch gekennzeichnet,**
   **daß** als Ist-Verzögerungssignal (SZist) die Differenz (SZistM-SZist0) zwischen dem momentanen Ist-Verzögerungssignal (SZistM) und einem eine beim Start des Verfahrens vorhandene Anfangsverzögerung (Zist0) abbildenden Anfangs-Verzögerungssignal (SZist0) herangezogen wird.

7. Verfahren nach einem der vorhergehenden Ansprüche, wobei das Fahrzeug als Zugfahrzeug zur Koppelung mit wenigstens einem Anhänger mit einer durch ein in dem Zugfahrzeug erzeugtes Anhänger-Steuersignal (SAH) gesteuerten Anhängerbremsanlage eingerichtet ist,
   **dadurch gekennzeichnet,**

**daß** das Anhänger-Steuersignal (SAH) nach dem Produkt aus dem Verknüpfungssignal (SV) und dem Verzögerungsanforderungssignal (SZsoll) bemessen wird.

8. Verfahren nach einem der Ansprüche 1 bis 6, wobei das Fahrzeug als Zugfahrzeug zur Koppelung mit wenigstens einem Anhänger mit einer durch ein in dem Zugfahrzeug erzeugtes Anhänger-Steuersignal (SAH) gesteuerten Anhängerbremsanlage eingerichtet ist,
**dadurch gekennzeichnet,**
**daß** das Anhänger-Steuersignal (SAH) nach dem Wert des Verzögerungsanforderungssignals (SZsoll) bemessen wird.

9. Verfahren zur Abbremsung eines Fahrzeugs nach einem der vorhergehenden Ansprüche,
**dadurch gekennzeichnet,**
**daß** während einer Annäherung der Bremse (15 bzw. 8) bzw. einer der Bremsen (15, 8) an ihre Belastungsgrenze das Verknüpfungssignal (SV) bzw. das Hilfssignal (SR) konstant gehalten wird.

10. Verfahren nach Anspruch 9,
**dadurch gekennzeichnet,**
**daß** der Belastungszustand der Bremse/n (15 bzw. 8) mittels Erfassung der Temperatur wenigstens jeweils eines Bremsenbauteils und/oder eines mathematischen Aufheizmodells wenigstens jeweils eines Bremsenbauteils und/oder eines mathematischen Belastungs-Kumulierungsmodells wenigstens jeweils eines Bremsenbauteils überwacht wird.

**Claims**

1. Method of braking a vehicle having at least one brake (15; 8) actuated by brake-application energy,
which method is started by a deceleration requirement signal (SZsoll) produced by the driver,
wherein brake-application energy is so supplied to the brake (15; 8) that an actual deceleration signal (SZist) resulting therefrom is brought into line with the deceleration requirement signal (SZsoll)
and wherein furthermore the brake-application energy is given a magnitude as a function of the deceleration requirement signal (SZsoll) and a load signal,
**characterised in that**
as the load signal there is used a linkage signal (SV) linking the deceleration requirement signal (SZsoll) and the associated braking force.

2. Method according to claim 1,
**characterised in that**,
during a brake actuation, if the actual deceleration signal (SZist) departs from the deceleration requirement signal (SZsoll), the linkage signal (SV) is modified.

3. Method according to claim 1,
**characterised in that**,
during a brake actuation, if the actual deceleration signal (SZist) departs from the deceleration requirement signal (SZsoll), an auxiliary signal (SR) is modified, and the linkage signal (SV) is updated after completion of the brake actuation.

4. Method according to one of the preceding claims, wherein the at least one brake (15; 8) is a front axle brake (15) and the brake-application energy is front axle brake-application energy (Ev) and, in addition, the vehicle has at least one rear axle brake (8) actuated by rear axle brake-application energy (Eh),
**characterised in that**
the brake-application energies (Ev, Eh) are allocated to the brakes (15, 8) in accordance with prespecified allocation rules.

5. Method according to claim 4,
**characterised in that**
the linkage signal (SV) and the deceleration requirement signal (SZsoll) are used as variables of the allocation rules.

6. Method according to one of the preceding claims,

**characterised in that**
as the actual deceleration signal (SZist) there is used the difference (SZistM-SZist0) between the instantaneous actual deceleration signal (SZistM) and an initial deceleration signal (SZist0) representing an initial deceleration (Zist0) that is present at the start of the method.

7. Method according to one of the preceding claims, wherein the vehicle is arranged as a towing vehicle to be coupled to at least one trailer having a trailer braking system controlled by a trailer control signal (SAH) produced in the towing vehicle,
**characterised in that**
the trailer control signal (SAH) is given a magnitude in accordance with the product of the linkage signal (SV) and the deceleration requirement signal (SZsoll).

8. Method according to one of claims 1 to 6, wherein the vehicle is arranged as a towing vehicle to be coupled to at least one trailer having a trailer braking system controlled by a trailer control signal (SAH) produced in the towing vehicle,
**characterised in that**
the trailer control signal (SAH) is given a magnitude in accordance with the value of the deceleration requirement signal (SZsoll).

9. Method of braking a vehicle, in accordance with one of the preceding claims,
**characterised in that**
while the brake (15; 8) or one of the brakes (15, 8) is approaching its loading limit, the linkage signal (SV) and/or the auxiliary signal (SR) is kept constant.

10. Method according to claim 9,
**characterised in that**
the loading state of the brake(s) (15; 8) is monitored by ascertaining the temperature of at least one respective brake component and/or of a mathematical heating model of at least one respective brake component and/or of a mathematical cumulative loading model of at least one respective brake component.

**Revendications**

1. Procédé de freinage d'un véhicule comportant au moins un frein (15 ou 8) actionné par une énergie de serrage, qui est déclenché par un signal de demande de décélération (SZsoll) produit par le conducteur,
et dans lequel l'énergie de serrage est envoyée au frein (15 ou 8) de telle sorte qu'un signal de décélération réel (SZist) provoqué de ce fait est rendu égal au signal de demande de décélération (SZsoll),
et dans lequel en outre l'énergie de serrage est dimensionnée en fonction du signal de demande d'accélération (SZsoll) ainsi que d'un signal de charge,
**caractérisé en ce**
**qu'**on utilise comme signal de charge un signal de combinaison (SV), qui combine le signal de demande de décélération (SZsoll) et la force de freinage associée.

2. Procédé selon la revendication 1, **caractérisé en ce que** pendant un actionnement du frein, dans le cas où le signal de décélération réel (SZist) diffère du signal de demande de décélération (SZsoll), le signal de combinaison (SV) est modifié.

3. Procédé selon la revendication 1, **caractérisé en ce que** pendant un actionnement du frein, dans le cas où le signal de décélération réelle (SZist), qui diffère du signal de demande de décélération (SZsoll), un signal auxiliaire (SR) est modifié et le signal de combinaison (SV) est actualisé à la fin de l'actionnement du frein.

4. Procédé selon l'une des revendications précédentes, selon lequel le au moins un frein (15 ou 8) est un frein d'essieu avant (15) et l'énergie de serrage est une énergie de serrage d'essieu avant (Ev) et le véhicule comporte en outre au moins un frein d'essieu arrière (8) actionné par une énergie de serrage d'essieu arrière (Eh),
**caractérisé en ce que** les énergies de serrage (Ev, Eh) sont réparties aux freins (15,8) conformément à des règles de répartition prédéterminées.

5. Procédé selon la revendication 4, **caractérisé en ce que** le signal de combinaison (SV) et le signal de demande de décélération (SZsoll) sont utilisés en tant que variables des règles de répartition.

6. Procédé selon l'une des revendications précédentes, **caractérisé en ce qu'**on utilise comme signal de décélération réelle (SZist) la différence (SZistM-SZist0) entre le signal de décélération réel instantané (SZistM) et un signal de décélération initiale (SZist0) qui représente une décélération initiale (Zist0) présente lors du démarrage du procédé.

7. Procédé selon l'une des revendications précédentes, selon lequel le véhicule est agencé sous la forme d'un véhicule tracteur destiné à être couplé à au moins une remorque, qui comporte une installation de freinage commandée par un signal de commande de remorque (SAH) produit dans le véhicule tracteur,
   **caractérisé en ce que** le signal de commande de remorque (SAH) est dimensionné en fonction du produit du signal de combinaison (SV) par le signal de demande de décélération (SZsoll).

8. Procédé selon l'une des revendications 1 à 6, selon lequel le véhicule est agencé sous la forme d'un véhicule tracteur destiné à être couplé à au moins une remorque, qui comporte une installation de freinage commandée par un signal de commande de remorque (SAH) produit dans le véhicule tracteur,
   **caractérisé en ce que** le signal de commande de remorque (SAH) est dimensionné en fonction de la valeur du signal de demande de décélération (SZsoll).

9. Procédé de freinage d'un véhicule selon l'une des revendications précédentes, **caractérisé en ce que**, au cours du rapprochement du frein (15 ou 8) ou de l'un des freins (15, 8) vers sa limite de charge, le signal de combinaison (SV) ou le signal auxiliaire (SR) est maintenu constant.

10. Procédé selon la revendication 9, **caractérisé en ce que** l'état de charge du ou des freins (15 ou 8) est contrôlé au moyen de la détection de la température au moins respectivement d'un composant de frein et/ou sur la base d'un modèle mathématique d'échauffement d'au moins respectivement un composant du frein et/ou d'un modèle mathématique de cumul de charge d'au moins respectivement un composant du frein.

SZsoll SZsoll SR SV SAH SZist SEh SEv Eh Ev